# FASCICULE DE BREVET EUROPEEN

(11) **EP 0 860 919 B1**
(45) Date de publication et mention de la délivrance du brevet: **29.05.2002**
(21) Numéro de dépôt: 98400402.8
(22) Date de dépôt: 19.02.1998
(51) Int. Cl.: H02B 13/035

(54) **Système de commutation incluant un sectionneur d'injection de courant intégré à un disjoncteur de générateur**
Schaltsystem enthaltende ein Strominjektionsschalter integriert in einem Generatorschalter
Switching system comprising a current injection switch integrated in a generator switch

(30) Priorité: 20.02.1997 FR 9702010
(43) Date de publication de la demande: 26.08.1998
(73) Titulaire: GEC ALSTHOM T & D SA, 75116 Paris (FR)
(72) Inventeur: Biquez, François, 69530 Brignais (FR); Astic, Yves, 69009 Lyon (FR); Willieme, Jean-Marc, 69350 La Mulatiere (FR)
(74) Mandataire: Gosse, Michel

(56) Documents cités:
- EP-A- 0 567 773
- DE-A- 1 910 871
- FR-A- 2 548 473

## Description

L'invention concerne un système de commutation à plusieurs positions pour séparer ou relier ensemble un générateur, un transformateur de réseau et un dispositif de démarrage, comprenant un disjoncteur de générateur et un sectionneur de barre pour séparer ou relier ensemble le générateur et le transformateur de réseau et un sectionneur de démarrage pour séparer ou relier ensemble le générateur et le dispositif de démarrage.

Un tel système est déjà connu du document de brevet européen N°0 567 773. Dans ce système de commutation connu, le sectionneur de barre et le sectionneur de démarrage sont conçus comme un sectionneur unique à trois positions comportant trois contacts fixes et un contact mobile ce qui impose une réalisation sous la forme d'un couteau tournant. Un tel agencement, bien qu'économique pour des courants relativement faibles, devient onéreux à réaliser pour un courant nominal à partir de 6300A en raison d'une adaptation spéciale et nécessaire du couteau tournant pour une telle valeur de courant nominal. Une telle valeur de courant nominal est typique pour un alternateur de centrale du type turbine de gaz ou cycle combiné.

L'invention a pour but de proposer un système de commutation tel que défini ci-dessus qui soit moins onéreux à réaliser notamment pour une application avec des courants nominaux allant au delà de 6300A.

L'idée à la base de l'invention est de séparer le sectionneur de démarrage du sectionneur de barre.

Plus particulièrement, l'invention a pour objet un système de commutation à plusieurs positions pour séparer ou relier ensemble un générateur, un transformateur de réseau et un dispositif de démarrage, comprenant un disjoncteur de générateur et un sectionneur de barre pour séparer ou relier ensemble le générateur et le transformateur de réseau et un sectionneur de démarrage pour séparer ou relier ensemble le générateur et le dispositif de démarrage, caractérisé en ce que :
le sectionneur de barre comprend un premier contact fixe et un premier contact mobile coopérant par coulissement avec le premier contact fixe, le premier contact fixe et le premier contact mobile étant intégrés au disjoncteur de générateur ;
le sectionneur de démarrage comprend un second contact fixe et un second contact mobile coopérant par rotation avec le second contact fixe.

Cet agencement permet d'exploiter indépendamment le sectionneur de démarrage et le sectionneur de barre ce qui contribue à la souplesse d'utilisation de l'ensemble. Il permet aussi de raccorder électriquement de façon simple par des câbles le sectionneur de démarrage et le dispositif de démarrage.

D'autres avantages de l'invention apparaîtront encore à la lecture de la description qui suit d'un exemple de réalisation de l'invention.

La figure 1 représente de façon très simplifiée en schéma unifilaire un dispositif de générateur comme une installation à turbine de gaz incluant le système de commutation selon l'invention.

La figure 2 montre plus en détail et de façon schématique selon une vue en perspective arrachée, le système de commutation selon l'invention.

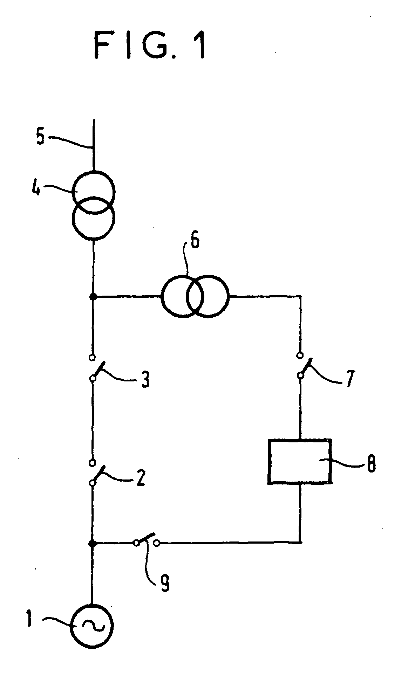

Le système de commutation selon l'invention à plusieurs phases fait partie d'un dispositif de générateur comme celui montré sur la figure 1.

Plus particulièrement sur cette figure, on voit en schéma unifilaire un générateur 1 qui est relié, via un disjoncteur de générateur 2 et un sectionneur de barre 3, à un transformateur élévateur de tension 4 relié au réseau 5.

Par ailleurs, une dérivation relie le générateur 1 au transformateur de réseau 4 via un transformateur de soutirage 6 qui alimente un convertisseur statique à fréquence variable formant un dispositif de démarrage 8, un disjoncteur 7 du convertisseur statique à fréquence variable, le dispositif de démarrage 8 et un sectionneur de démarrage 9. La liaison entre le transformateur de soutirage 6 et le sectionneur de démarrage 9 peut se faire par câbles ce qui est économiquement intéressant par rapport aux autres liaisons de la figure 1 qui se font par jeu de barres sous gaine métallique.

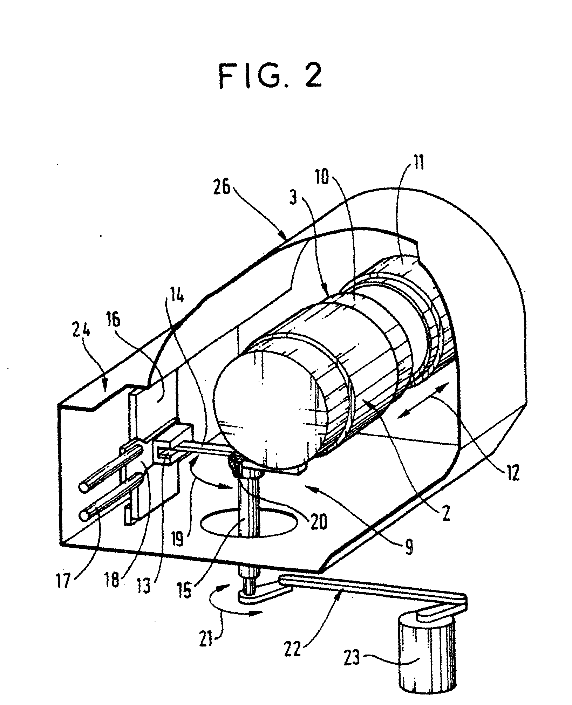

La figure 2 montre le système de commutation à plusieurs positions, pour une phase, qui comporte donc le sectionneur de barre 3 et le sectionneur de démarrage 9.

Plus particulièrement, le sectionneur de barre comprend un contact fixe sous la forme d'un premier tube métallique conducteur 10 et un contact mobile en translation sous la forme d'un second tube métallique conducteur 11 coopérant avec le premier tube 10 par coulissement comme indiqué par la flèche 12. Sur la figure 2, le sectionneur de barre est montré en position ouverte. Un tel sectionneur de barre est économique à réaliser même pour des courants allant au delà de 6300 A. Comme visible sur cette figure, les contacts fixe et mobile 10 et 11 du sectionneur de barre sont intégrés au disjoncteur de générateur 2.

Le sectionneur de démarrage 9 comprend un contact fixe 13 sous la forme d'une ou plusieurs pinces métalliques conductrices et un contact mobile 14 sous la forme d'un couteau métallique conducteur tournant pour coopérer avec le contact fixe 13 par rotation autour d'un axe défini par une bielle 15 en un matériau isolant de telle sorte à venir s'embrocher dans la pince 13.

La pince 13 est reliée mécaniquement à la gaine 15 du disjoncteur de générateur mise à la terre, par une plaque isolante 16 assurant l'isolement à la terre quand le sectionneur de démarrage est en position fermée comme illustrée sur la figure 2. Une telle construction permet notamment une connexion par câbles 17 entre le dispositif de démarrage et le sectionneur de démarrage sur une plage de raccordement fixe 18 à l'aide de cosses d'extrémité à visser.

Le couteau 14 tournant comme illustré par la flèche 19, est relié électriquement et mécaniquement à la partie sous tension du disjoncteur de générateur par l'intermédiaire de contacts glissants tournant 20 monté sur la bielle 15,

La bielle 15 est manoeuvrée en rotation comme illustré par la flèche 21 par un embiellage 22 sous la commande d'un organe de manoeuvre 23 motoréducteur du sectionneur de démarrage.

Une boîte à câbles 24 est fixée à la gaine 15 du disjoncteur de générateur pour le passage des câbles passant au travers de la gaine par un système de presse étoupes ou analogue.

Pour réviser le dispositif de générateur, le sectionneur de barre 3 est ouvert et le sectionneur de démarrage 9 est ouvert de sorte que le générateur 1 est séparé du transformateur de réseau 4 et du dispositif de démarrage 8.

En vue du démarrage du générateur 1, (le sectionneur de barre 3 étant fermé) le disjoncteur de générateur 2 est ouvert et on ferme le sectionneur de démarrage 9, c'est-à-dire que le contact 14 est embroché dans le contact 13. Le générateur 1 est toujours séparé du transformateur de réseau 4 mais est relié au dispositif de démarrage 8. On ferme le disjoncteur 7 du dispositif de démarrage. Le générateur 1 démarre alors sous la commande du dispositif de démarrage.

Dès que le générateur 1 a atteint une certaine vitesse adaptée à la commutation synchrone sur le réseau et dès qu'il peut accélérer sans alimentation extérieure, on ouvre le disjoncteur 7 du dispositif de démarrage puis on ouvre le sectionneur de démarrage 9, c'est-à-dire que l'on débroche le contact 14 du contact 13 de sorte à séparer le générateur 1 du dispositif de démarrage. On ferme enfin disjoncteur de générateur 2 pour relier le générateur 1 au transformateur de réseau 4. Après la fermeture du disjoncteur de générateur, le générateur 1 alimente le transformateur de réseau 4.

Dans cette réalisation, le générateur peut être un alternateur de centrale à turbine de gaz ou à cycle combiné.

## Revendications

1. Un système de commutation à plusieurs positions pour séparer ou relier ensemble un générateur (1), un transformateur de réseau (4) et un dispositif de démarrage (8), comprenant un disjoncteur de générateur (2) et un sectionneur de barre (3) pour séparer ou relier ensemble le générateur (1) et le transformateur de réseau (4) et un ectionneur de démarrage (9) pour séparer ou relier ensemble le générateur (1) et le dispositif de démarrage (8) **caractérisé en ce que**:
le sectionneur de barre (3) comprend un premier contact fixe (10) et un premier contact mobile (11) coopérant par coulissement avec le premier contact fixe (10), le premier contact fixe (10) et le premier contact mobile (11) étant intégrés au disjoncteur (2) de générateur (1) ;
le sectionneur de démarrage (9) comprend un second contact fixe (13) et un second contact mobile (14) coopérant par rotation avec le second contact fixe (13).

2. Le système selon la revendication 1, dans lequel le second contact fixe (13) est relié mécaniquement, par l'intermédiaire d'une plaque isolante (16), à une gaine (15) mise à la terre du disjoncteur (2) de générateur (1).

3. Le système selon la revendication 1, dans lequel le second contact mobile (14) est relié mécaniquement à la partie sous tension du disjoncteur (2) de genérateur (1) par l'intermédiaire de contacts glissants (20) tournant et est actionné par une bielle tournante isolante (15) reliée par embiellage à un organe de manoeuvre (23).

## Patentansprüche

1. Schaltsystem mit mehreren Positionen zum Trennen oder Verbinden von einem Generator (1), einem Netztransformator (4) und einer Startvorrichtung (8), welches einen Generatorschalter (2) und einen Schienentrennschalter (3) zum Trennen oder Verbinden des Generators (1) und des Netztransformators (4) und einen Startschalter (9) zum Trennen oder Verbinden des Generators (1) und der Startvorrichtung (8) umfasst, **dadurch gekennzeichnet, dass**:
der Schienentrennschalter (3) einen ersten festen Kontakt (10) und einen durch Verschieben mit dem ersten festen Kontakt (10) zusammenwirkenden ersten bewegbaren Kontakt (11) umfasst, wobei der erste feste Kontakt (10) und der erste bewegbare Kontakt (11) im Schalter (2) des Generators (1) integriert sind;
der Startschalter (9) einen zweiten festen Kontakt (13) und einen durch Drehen mit dem zweiten festen Kontakt (13) zusammenwirkenden zweiten bewegbaren Kontakt (13) umfasst.

2. System nach Anspruch 1, bei welchem der zweite feste Kontakt (13) mittels einer isolierenden Platte (16) mit einer geerdeten Hülle (15) des Schalters (2) des Generators (1) mechanisch verbunden ist.

3. System nach Anspruch 1, bei welchem der zweite bewegbare Kontakt (14) mittels Drehgleitkontakte (20) mit dem unter Spannung stehenden Teil des Schalters (2) des Generators (1) mechanisch verbunden ist, und durch eine durch ein Gestänge mit einem Betätigungsmittel (23) verbundene isolierende Drehstange (15) betätigt wird.

## Claims

1. A switching system having a plurality of positions for separating or interconnecting a generator (1), a network transformer (4), and a starter device (8), the system comprising a circuit breaker (2) for the generator and a busbar disconnector (3) for separating or interconnecting the generator (1) and the network transformer (4), and a starter disconnector (9) for separating or interconnecting the generator (1) and the starter device (8), the system being **characterized in that**:
the busbar disconnector (3) comprises a first fixed contact (10) and a first moving contact (11) that co-operates by sliding with the first fixed contact (10), the first fixed contact (10) and the first moving contact (11) being integrated with the circuit breaker (2) of the generator (1); and
the starter disconnector (9) comprises a second fixed contact (13) and a second moving contact (14) that co-operates with the second fixed contact (13) by rotation.

2. The system according to claim 1, in which the second fixed contact (13) is mechanically connected via an insulating plate (16) to grounded cladding (26) of the circuit breaker (2) of the generator (1).

3. The system according to claim 1, in which the second moving contact (14) is mechanically connected to the live portion of the circuit breaker (2) of the generator (1) via rotary sliding contacts (20) and is actuated by an insulating rotary shaft (15) connected via a linkage to a drive unit (23).
